# FASCICULE DE BREVET EUROPEEN

(11) **EP 1 623 358 B1**
(45) Date de publication et mention de la délivrance du brevet: **09.08.2006**
(21) Numéro de dépôt: 04742529.3
(22) Date de dépôt: 16.04.2004
(51) Int. Cl.: G06K 7/00, G06K 7/08

(54) **POSTE DE LECTURE ET/OU D ECRITURE POUR JETONS DE JEU ELECTRO NIQUES.**
LESE- UND/ODER SCHREIBSTATION FÜR ELEKTRONISCHE SPIELMARKEN
READ AND/OR WRITE STATION FOR ELECTRONIC GAMING CHIPS

(30) Priorité: 12.05.2003 FR 0305681
(43) Date de publication de la demande: 08.02.2006
(73) Titulaire: Gaming Partners International, 21420 Savigny-les-Beaune (FR)
(72) Inventeur: GELINOTTE, Emmanuel, F-21420 SAVIGNY-LES-BEAUNE (FR)
(74) Mandataire: Poidatz, Emmanuel
(86) Numéro de dépôt international: PCT/FR2004/000948
(87) Numéro de publication internationale: WO 2004/102731

(56) Documents cités:
- WO-A-01/08080
- FR-A- 2 745 103
- US-A- 5 651 548

## Description

La présente invention concerne un poste de lecture et/ou d'écriture dans une mémoire d'un jeton à circuit électronique, en particulier d'un jeton de jeu, comportant des moyens de stockage dudit jeton et une unité de communication apte à échanger une information avec ladite mémoire par l'intermédiaire de moyens d'antenne quand ledit jeton est disposé dans lesdits moyens de stockage, lesdits moyens d'antenne comportant des première et deuxième antennes comprenant des première et deuxième boucles, respectivement. Il est entendu pour la suite de l'exposé que les termes « moyens de stockage » doivent être interprétés de leur sens le plus large et couvrent notamment les casiers, boîtes, plateaux pour jetons, les dessus de tables de jeux, de change ou de caisse pour salles de jeu ou de casino, les trieuses de jetons et toute surface ou volume susceptible de recevoir des jetons de façon permanente ou temporaire, les jetons étant empilés ou en vrac.

Par jeton de jeu ou « jeton de casino », on entend tout élément en forme de disque ou de plaque et représentant une valeur nominale ou non. D'une façon générale les jetons sont fabriqués en matière plastique rigide et résistante aux rayures. Les jetons présentent des motifs variés en dessins et en couleurs pour former un décor plus ou moins complexe et réduire les risques de falsification et/ou de reproduction frauduleuse. Certains jetons intègrent un circuit électronique à mémoire dans lequel sont stockées des informations concernant le jeton, notamment son numéro ou code d'identification et sa valeur numérique. Ces jetons équipés de circuits électroniques à mémoire sont également appelés « jetons à mémoire électronique » ou « jetons à circuit électronique ». Selon les modèles des jetons, les circuits électroniques sont du type à mémoire simple PROM, à mémoire reprogrammable EEPROM ou même à microprocesseurs assortis d'une mémoire.

Les moyens de stockage des jetons, par exemple des casiers, servent classiquement de réserves à jetons aux points de change et/ou aux tables de jeux. Un casier contient les jetons échangés contre des valeurs, par exemple des jetons ou plaques de valeurs faciales différentes, monnaie, etc. Il est également possible d'y prélever les jetons nécessaires au paiement des mises gagnantes et d'y ranger les jetons provenant des mises perdantes. Le nombre de jetons d'un casier est variable et par conséquent la valeur globale représentée par ces jetons évolue dans le temps.

Dans le but de faciliter le suivi du contenu en jetons du casier et des mouvements entrée/sortie des jetons afin de mieux contrôler ces mouvements et de ce fait de lutter plus efficacement contre les fraudes, il a déjà été proposé, dans la demande W0 97/30414 déposée au nom du Demandeur, de munir le casier de colonnes de rangement des jetons et de l'équiper de moyens de lecture et/ou d'écriture aptes à communiquer avec les jetons rangés dans lesdites colonnes. Ces moyens de lecture comportent des antennes à ferrite en tête de colonne ou des antennes à boucle placées en biais sous les colonnes, ces dernières étant toutefois moins performantes. De tels dispositifs donnent de bons résultats surtout avec des antennes à ferrite pour une gamme de fréquence de travail comprise entre 125 et 140 KHz. De bons résultats sont cependant plus délicats à obtenir lorsque que l'on travaille en fréquences plus élevées par exemple aux standards de 13,56 MHz ou 2,45 GHz (la réduction correspondante du nombre de spires de l'antenne intégrée au jeton réduisant d'autant la résistance aux perturbations dues au rayonnement des antennes à ferrite du casier).

Par ailleurs le rangement des jetons dans les colonnes ou piles prépositionnées préalablement aux opérations d'écriture et/ou de lecture n'est pas acceptable ou approprié dans certaines applications, en particulier pour l'aire de stockage fermée couramment appelé « chip float » (réserve de jetons de valeur) rencontré notamment, à titre d'exemple non limitatif, dans les tables de jeux de type « Roulette Américaine ». A cet emplacement, les jetons doivent pouvoir être empilés en différentes piles verticales posées sur le plateau de la table de jeu, sans ordre ou emplacement ponctuel particulier.

On connaît également dans le cadre de la mise oeuvre de l'invention objet du brevet FR-B-2.745.103 des postes de lecture et/ou d'écriture comportant un plateau de table de jeu, de change ou de caisse portant une antenne à nappe conductrice imprimée en spirale sur un support isolant et reliée à une unité de communication. La nappe de l'antenne définit une zone centrale interne de transmission. L'unité de communication peut échanger des informations avec les jetons, éventuellement empilés, placés à plat sur cette zone de transmission.

Comme pour les casiers à jetons mentionnés ci-dessus, les échanges avec un jeton se font "sans contact", par ondes modulées à des fréquences généralement d'environ 125 à 140 KHz, par l'intermédiaire de l'antenne. La communication nécessite classiquement que le jeton ne soit pas « sur la tranche », c'est-à-dire orienté parallèlement au champ magnétique généré par la nappe. De préférence, le jeton est posé à plat sur le plateau de la table, perpendiculairement au champ magnétique généré par la nappe d'antenne. Grâce à l'utilisation d'algorithmes d'anti-collision, l'unité de communication est également capable de procéder à une lecture/écriture de tous les jetons d'une ou plusieurs piles.

Ce type d'antenne bien adapté pour des opérations de contrôle d'un jeton ou d'une ou plusieurs piles de jetons (éventuellement de grande capacité jusqu'à 20 jetons) présente l'inconvénient d'avoir une zone d'ombre de lecture/écriture en limite interne de la nappe réduisant d'autant le diamètre de la zone centrale de transmission, par exemple une zone d'ombre en couronne de 2 à 2,5 cm de largeur pour une nappe de 8 cm de diamètre extérieur. De plus la nappe d'antenne ne peut pas être élargie à volonté. Un rapport minimal entre la surface des antennes des jetons et la surface de la nappe d'antenne doit en effet être respecté.

Pratiquement, on considère qu'une nappe d'antenne ne doit pas pouvoir recevoir plus de 10 piles de jetons.

Par ailleurs le document WO 01/08080 décrit un dispositif d'identification dynamique d'un objet mobile permettant la lecture seule d'une étiquette électronique fixée sur l'objet mobile en déplacement sur un convoyeur à bande. Ce dispositif de lecture connu comporte une antenne à champ tournant unique et composée de deux boucles coplanaires parallèles au plan du convoyeur, les boucles étant activées simultanément avec un couplage en quadrature de phase sur une zone de recouvrement des boucles, et permet une identification de l'objet mobile quelle que soit l'orientation de l'étiquette notamment perpendiculairement au plan de l'antenne.

Il existe donc un besoin pour un poste de lecture et/ou d'écriture à large zone ou volume de stockage apte à communiquer à hautes fréquences, de manière fiable, avec une mémoire d'un jeton à circuit électronique disposé en un emplacement quelconque de la zone de stockage.

Selon l'invention, on atteint ce but au moyen d'un poste de lecture et/ou d'écriture dans une mémoire d'un jeton à circuit électronique, en particulier d'un jeton de jeu, ledit poste comportant
- des moyens de stockage dudit jeton, et
- une unité de communication apte à échanger de l'information avec ladite mémoire par l'intermédiaire de moyens d'antenne quand ledit jeton est positionné dans lesdits moyens de stockage selon une orientation permettant ladite communication,
lesdits moyens d'antenne comportant au moins des première et deuxième antennes comprenant des première et deuxième boucles, respectivement. Le poste de lecture et/ou d'écriture selon l'invention est remarquable en ce que lesdites première et deuxième boucles sont disposées de façon adjacente au moins en partie superposées l'une sur l'autre de manière à définir ensemble une zone de lecture et/ou d'écriture élargie et de qualité de transmission sensiblement homogène et en ce que ladite unité de communication comporte des moyens de sélection séquentielle desdites antennes.

Comme on le verra plus en détail dans la suite de la description, la superposition des boucles permet de supprimer les zones de mauvaise transmission. Il devient donc possible, en superposant une multitude de boucles, de créer, dans lesdits moyens de stockage des jetons, de grandes zones de transmission fiable quel que soit l'emplacement d'un jeton dans cette zone de transmission, l'unité de communication pouvant ainsi communiquer de manière fiable avec une mémoire de ce jeton.

De plus les postes de lecture et/ou écriture selon l'invention sont capables de fonctionner même à des fréquences de modulation de plusieurs GHz, par exemple 2,45 GHz en maîtrisant les phénomènes de couplage entre boucles. Selon d'autres caractéristiques préférées de l'invention,
- lesdites première et deuxième antennes comprennent chacune une boucle supérieure et une boucle inférieure connectées électriquement en parallèle, lesdites boucles inférieures et/ou lesdites boucles supérieures étant au moins en partie superposées l'une sur l'autre ;
- lesdites boucles supérieures d'une part et lesdites boucles inférieures d'autre part s'étendent dans deux plans sensiblement parallèles, lesdites boucles inférieure et supérieure d'une antenne se faisant face ;
- la plus petite dimension d'une zone de recouvrement des surfaces intérieures définies par deux boucles superposées est supérieure ou égale à la somme des largeurs des bandes périphériques de mauvaise transmission desdites boucles ;
- au moins une desdites boucles comporte une pluralité de spires jointives superposées ;
- lesdites spires sont superposées sur une hauteur comprise entre 4 et 10 mm ;
- lesdits moyens de stockage comportent des parois supérieure et/ou inférieure sensiblement parallèles et servant de supports aux dites boucles, le nombre, les dimensions, l'emplacement et les zones de recouvrement desdites boucles étant déterminés de manière que ladite unité de communication puisse échanger ladite information avec ledit jeton quelle que soit la position dudit jeton, pourvu que ledit jeton s'étende sensiblement parallèlement aux dites parois supérieure e/ou inférieure ;
- lesdites parois supérieure et inférieure servent de supports aux dites boucles inférieures et supérieures, respectivement ;
- ladite unité de communication comporte des moyens de discrimination des jetons ;
- ladite unité de communication comporte des moyens d'élimination des doublons ;
- au moins une desdites antennes est connectée électriquement à ladite unité de communication par l'intermédiaire d'un dispositif d'ajustement du déphasage entre la tension électrique aux bornes de ladite antenne et l'intensité électrique circulant dans ladite antenne;
- ledit dispositif d'ajustement de déphasage est connecté électriquement aux bornes de ladite antenne à proximité immédiate de ladite antenne ;
- ledit poste comporte une pluralité d'antennes intégrées en tout ou partie dans une table de jeu, de change ou de caisse ou dans une trieuse de jetons ;
- ledit poste comporte une pluralité d'antennes intégrées en tout ou partie dans un dispositif de stockage portatif et/ou amovible de jetons, notamment un casier, un plateau mobile ou une boîte à jetons.

L'invention concerne également des moyens d'antenne comportant des première et deuxième antennes comprenant respectivement des première et deuxième boucles au moins en partie superposées l'une sur l'autre, lesdits moyens d'antenne étant adaptés pour être associés auxdits moyens de stockage de jetons à circuit électronique et incorporés fonctionnellement dans un poste de lecture et/ou d'écriture selon l'invention.

L'invention concerne enfin un procédé de réglage d'un poste de lecture et/ou d'écriture selon l'invention, remarquable en ce qu'il comporte les étapes successives suivantes :
a) câblage complet dudit poste de lecture et/ou d'écriture ;
b) connexion électrique de ladite première antenne et ajustement du déphasage entre la tension électrique aux bornes de ladite première antenne et le courant électrique circulant dans ladite première antenne à une première valeur prédéterminée, de préférence sensiblement égale à zéro ;
c) connexion électrique de ladite deuxième antenne et ajustement du déphasage entre la tension électrique aux bornes de ladite deuxième antenne et le courant électrique circulant dans ladite deuxième antenne à une deuxième valeur prédéterminée, de préférence sensiblement égale à zéro.

La description qui va suivre, faite en se référant aux dessins annexés, permettra de mieux comprendre et apprécier les avantages de l'invention. Dans ces dessins :
- la figure 1 représente schématiquement une architecture d'un poste de lecture et/ou d'écriture selon l'invention ;
- les figures 2a et 2b représentent schématiquement des moyens d'antenne selon une première variante de l'invention, dite « monoplan », en vues de dessus et de face, respectivement ;
- la figure 3 représente schématiquement des moyens d'antenne selon une deuxième variante de l'invention, dite « biplan », en perspective ;
- la figure 4 représente schématiquement une architecture de câblage de moyens d'antenne selon l'invention ;
- la figure 5 représente schématiquement une boîte à jetons portative intégrant un poste de lecture et/ou d'écriture selon l'invention, dans la variante « biplan », vue en perspective.

Sur ces figures, non limitatives, les différents éléments ne sont pas nécessairement représentés à la même échelle. Des références identiques ont été utilisées sur les différentes figures pour désigner des éléments identiques ou similaires. Les dimensions sont fournies à titre d'exemples seulement.

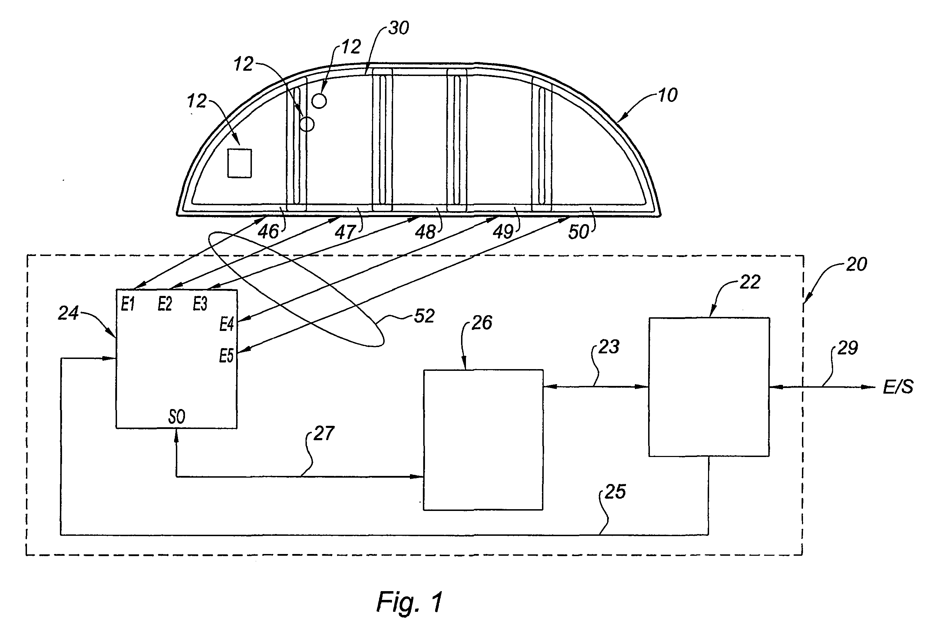

Le poste de lecture et/ou d'écriture selon l'invention illustré à la figure 1 comporte pour l'essentiel des moyens de stockage, sous la forme d'un plateau 10, susceptible d'accueillir des jetons de jeu 12 (illustrés sur la figure sous forme de plaque rectangulaire ou de disque), éventuellement rangés en piles, et une unité de communication 20 associée à des moyens d'antenne 30 constitués de cinq antennes en boucles plates 46 à 50.

Les deux bornes de chaque antenne 46 à 50 sont reliées par une ligne multiple 52 aux entrées doubles E1 à E5 d'une carte de multiplexage 24 formant interface de sélection séquentielle d'antenne. La sortie S0 de la carte 24 est reliée par la ligne bidirectionnelle 27 à une carte électronique de lecture/écriture 26 comportant des moyens de lecture dans la mémoire des jetons 12 d'une part et des moyens d'écriture dans la mémoire des jetons 12 d'autre part, contrôlés par une unité de traitement 22 à microprocesseur, en l'espèce un ordinateur de type PC.

L'unité de traitement 22 contrôle la carte de lecture/écriture 26 par la ligne 23 et la carte de multiplexage 24 par la ligne 25. De façon classique l'unité de traitement 22 communique vers l'extérieur (périphérique d'affichage, clavier, modem, interfaces réseau, serveur, etc.) par des lignes d'entrée/sortie E/S 29, soit en mode point à point, soit en mode réseau. Sans sortir du cadre de l'invention, l'unité de communication 20, dans une version simplifiée, ne comporte que des moyens de lecture dans la mémoire des jetons, sa structure et son fonctionnement étant similaires à ceux décrits ci-après pour l'unité de lecture /écriture 26.

L'unité de traitement 22 comporte classiquement un circuit horodateur capable de donner la date et l'heure de chaque événement et des mémoires EEPROM pour stocker les données échangées avec les jetons électroniques. Il est normalement équipé d'un clavier et d'un écran d'affichage, non représentés. Le clavier permet par exemple de rentrer dans le système des informations telles que les commandes d'ouverture et/ou de fermeture de la table de jeu à laquelle est associé le poste de lecture et/ou d'écriture, ou d'entrer le nom de l'opérateur, etc. De même, l'écran pourra afficher tout ou partie des informations suivantes: nombre total de jetons présents dans les moyens de stockage 10, nombre de jetons par dénomination, valeur globale contenue dans les moyens de stockage 10.

La carte de lecture/écriture 26 comprend un microprocesseur qui génère et interprète les signaux échangés avec les jetons à mémoire électronique et un oscillateur qui génère la fréquence porteuse (par exemple de 125 à 140 KHertz ou de 13,56 MHz ou de 2,45 GHz) du signal radio-fréquence émis vers les antennes. La carte 26 contient également un convertisseur Analogique/Numérique (A/N), un modulateur et un amplificateur. A partir des commandes et informations provenant de l'ordinateur 22, la carte 26 génère un signal analogique radiofréquence modulé en amplitude qui, via l'antenne sélectionnée, véhicule l'énergie, les données et un signal de synchronisation vers les jetons à mémoire électronique.

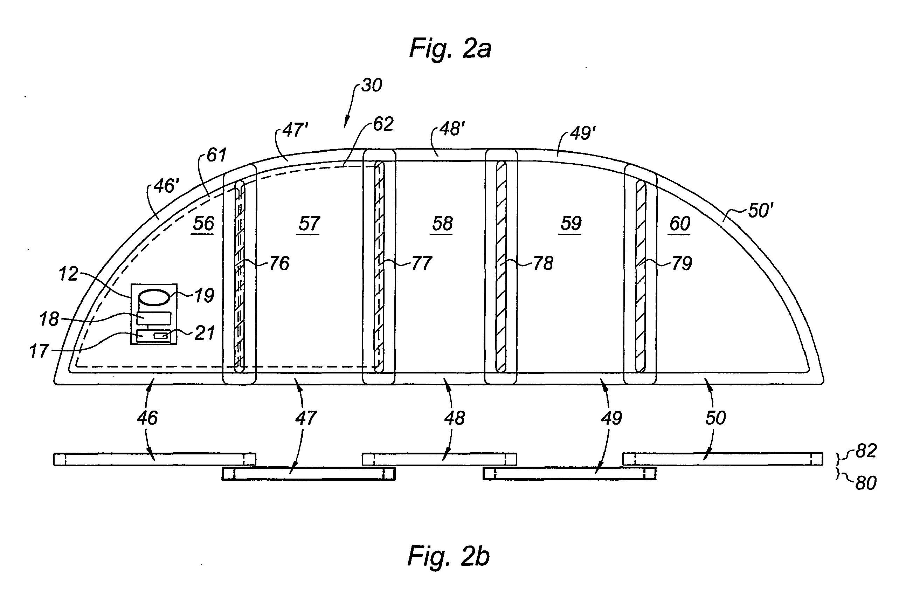

Le jeton, disque ou plaque, 12, représenté sur la figure 2a, est du type passif (sans stockage interne d'énergie) à lecture ou à lecture/écriture. Il comporte au moins un circuit électronique 17 à mémoire 21 et un émetteur/récepteur 18 apte à communiquer « sans contact » par l'intermédiaire d'une antenne interne 19. La qualité de la communication dépend de l'orientation du jeton 12 par rapport aux moyens d'antenne 30. De préférence, le jeton 12 est posé à plat ou empilé sur la zone de transmission définie par les antennes 46-50.

Dans la version la plus simple, le circuit électronique 17 est du type à microcircuit et équipé d'une mémoire 21 non reprogrammable (par exemple de type PROM) avec un code d'identification unique de 32 ou 64 bits dont le champ peut comporter le numéro de série du jeton 12.

Dans une version plus élaborée, le jeton 12 est à code évolutif et équipé d'une mémoire 21 reprogrammable (par exemple de type EEPROM) permettant la lecture et l'écriture. Cette possibilité de modifier les informations contenues dans la mémoire 21 augmente le degré de sécurité du jeton électronique 12 en particulier en permettant de changer dans le temps les paramètres d'authentification. De même, il est possible de personnaliser certaines zones de la mémoire 21 puis de les configurer, de manière réversible ou non, en zone mémoire à accès en lecture seule ou en zone mémoire à accès en lecture/écriture. La mémoire 21 peut comporter le numéro de série du jeton 12 ou du lot de jetons, la valeur nominale et d'autres informations telles que le nom du casino, etc.

Dans une version encore plus élaborée, le jeton 12 est équipé d'un microprocesseur susceptible de réaliser des traitements et des transactions complexes. De façon optionnelle, le dialogue entre l'unité de communication 20 et le jeton 12 n'est autorisé qu'après une mutuelle authentification, en introduisant des codes de type mots de passe et/ou clefs de cryptographie dans le jeton 12 et l'unité de communication 20 (notamment pour encrypter les données durant leur transfert entre l'unité de communication 20 et le jeton 12 et vice versa).

La mémoire 21 contient des informations codées propres au jeton 12 de façon à permettre son identification et son authentification à l'aide d'une unité de lecture appropriée (unité de lecture seule ou unité de lecture/écriture fonctionnant en mode lecture).

L'antenne interne 19, classiquement du type à bobines circulaires, est implantée au coeur du jeton 12 et adaptée pour recevoir, par couplage inductif avec les moyens d'antenne 30, de l'énergie et des informations. L'antenne interne 19 transmet à son tour l'énergie nécessaire au fonctionnement du circuit électronique 17 et de l'émetteur/récepteur 18. Elle assure enfin la transmission des données vers les moyens d'antenne 30.

La distance de travail entre les moyens d'antenne 30 et l'antenne interne 19 du jeton 12 est définie en fonction du flux magnétique nécessaire au bon fonctionnement du circuit électronique du jeton 12 et dépend donc de l'inductance, de la géométrie de l'antenne interne 19 et des moyens d'antenne 30, et du courant d'antenne dans les moyens d'antenne 30.

Le circuit électronique et le logiciel associé sont de préférence adaptés pour permettre soit la lecture et/ou l'écriture simultanée de plusieurs jetons soit la discrimination entre les jetons, de façon à travailler sur des jetons empilés. Ils comportent de plus des moyens, notamment logiciel, d'élimination de doublons (jetons lus au moins deux fois).

Dans le mode de réalisation préféré de l'invention, l'unité de communication 20 intègre une fonction de discrimination, notamment au niveau de la carte 26, de manière à pouvoir dialoguer successivement avec chacun des jetons 12 d'une ou plusieurs piles placées au-dessus d'une antenne, par exemple de l'antenne 46, lorsque cette dernière est active. L'unité de communication 20 saisit l'identité d'un premier jeton, puis réalise les opérations de lecture et/ou d'écriture désirées avec ce premier jeton. L'unité de communication 20 désactive alors le jeton saisi en lui envoyant une commande de mise en veille puis continue ses interrogations à la recherche d'autres jetons dans la zone de travail de l'antenne active 46 jusqu'à saisie de tous les jetons présents.

Après la saisie et/ou le traitement du dernier jeton, l'unité de communication 20 envoie une commande de réactivation de l'ensemble des jetons placés au-dessus de l'antenne 46, puis passe à une autre antenne, et ainsi de suite jusqu'à lecture de tous les jetons présents sur le plateau 10. Cette fonction de discrimination des jetons est également appelée fonction anti-collision.

La structure et le mode de fabrication des jetons à circuit électronique à mémoire 12 ne sont pas décrits plus en détail ici. A titre d'exemple non limitatif, la demande EP-A-0694872, au nom du demandeur, présente plusieurs types de structures de jetons utilisables dans le cadre de la présente invention. De même, la demande WO 97/30414 précitée comporte des compléments d'informations sur le mode de fonctionnement général de dispositifs de rangement électronique pour jetons de jeu.

En ce qui concerne la durée des transactions, les performances du poste selon l'invention, possibles avec les composants disponibles aujourd'hui en technologie 125 KHz, sont de l'ordre d'une dizaine de secondes pour la saisie d'une centaine de jetons.

Il est donc possible pour l'unité de communication 20 de déterminer en temps réel, par communication avec la mémoire 21 de chacun des jetons 12, le nombre de jetons à mémoire électronique contenus dans les moyens de stockage 10, la valeur de chaque jeton, la valeur globale instantanée contenue dans les moyens de stockage 10, l'identité de chaque jeton, la valeur par type de dénomination ou toute autre information associée, par exemple à l'identité du jeton. Ces informations peuvent être stockées, traitées en temps réel ou transmises à un serveur via un réseau pour permettre d'effectuer toutes les analyses et traitements désirés.

Chaque antenne 46-50 est formée par un fil électrique à base de cuivre, d'un diamètre de 0,8 à 1 mm, enroulé sur lui-même de manière à définir une boucle 46'-50', respectivement, à plusieurs spires. On appelle « surface intérieure » 56, 57, 58, 59 et 60, la surface délimitée par la boucle de l'antenne 46, 47, 48, 49 et 50 respectivement. De préférence, les spires sont superposées les unes aux autres, de préférence sur une hauteur comprise entre 4 et 10 mm. La forme et les dimensions de chaque boucle 46'-50' sont déterminées de manière que la communication avec un jeton 12 posé ou empilé dans la zone centrale de la boucle soit fiable grâce à une qualité de transmission homogène.

Les antennes 46-50 s'étalent sur le plateau 10 de manière à occuper sensiblement toute la surface du plateau 10. De préférence, les antennes 46-50 débordent de la surface du plateau 10 susceptible de recevoir des jetons 12. En effet, la surface intérieure 56-60 d'une boucle 46'-50' comporte une bande périphérique (représentée sur la figure 2a pour les seules boucles 46' et 47', et référencée 61 et 62, respectivement), d'une largeur d'environ 5 à 10 mm, dans laquelle la transmission est généralement de mauvaise qualité. Il convient, pour éviter qu'un jeton 12 ne puisse être placé au droit de cette bande périphérique 62, de faire déborder les antennes 46-50 d'au moins la largeur de la bande périphérique 62.

Dans un premier mode de réalisation, de type « monoplan », représenté sur les figures 2a et 2b, les boucles 46'-50' des antennes 46-50 se superposent partiellement deux à deux. Les surfaces intérieures 56 et 60 des antennes 46 et 50 recouvrent partiellement les surfaces intérieures 57 et 59 des antennes 47 et 49, respectivement, et la surface intérieure 58 de l'antenne 48 recouvre partiellement les surfaces intérieures 57 et 59 des antennes 47 et 49.

Les zones de recouvrement 76, 77, 78, et 79, représentées hachurées, de forme sensiblement allongée, permettent de réduire, voire de supprimer, les bandes de mauvaise transmission qui, sans recouvrement, se manifestent en périphérie de la surface intérieure des boucles.

Les dimensions d'une zone de recouvrement de deux boucles, par exemple des boucles 46' et 47', sont définies de manière à limiter les zones de chevauchement des bandes périphériques de mauvaise transmission, 61 et 62 respectivement, de ces deux boucles. Les zones de chevauchement de ces bandes périphériques constituent en effet des zones de transmission non optimale.

De préférence, la plus petite dimension de la zone de recouvrement 76 des deux boucles 46' et 47' est supérieure ou égale à la somme des largeurs des bandes périphériques 61 et 62 de mauvaise transmission de ces deux boucles. Ainsi, par exemple, si les boucles 46' et 47' présentent des bandes périphériques 61 et 62 d'une largeur de 8 mm, la largeur de la zone de recouvrement 76 sera-t-elle de préférence d'au moins 16 mm.

Les dimensions des zones de recouvrement 76, 77, 78, et 79 dépendent des jetons 12 utilisés, en particulier de leurs dimensions. De simples essais permettront à l'homme du métier de déterminer les dimensions optimales des zones de recouvrement en fonction de l'application visée.

Le recouvrement, selon l'invention, des surfaces intérieures des boucles des antennes permet d'obtenir une zone de transmission fiable de grande surface, par superposition partielle d'une pluralité d'antennes en boucle de petites surfaces.

De préférence, les antennes en superposition sont collées l'une à l'autre en leurs zones de contact.

De préférence encore, les antennes en superposition s'étendent selon deux couches inférieure 80 et supérieure 82, comme représenté sur la figure 2b. De préférence toujours, quand le nombre d'antennes nécessaires pour occuper la surface du plateau 10 susceptible de recevoir des jetons est impaire, le nombre de boucles de la couche supérieure 82 est supérieur au nombre de boucles de la couche inférieure 80. Avantageusement, une telle disposition augmente le nombre d'antennes dans la couche la plus proche des jetons 12, c'est-à-dire dans la couche supérieure 82.

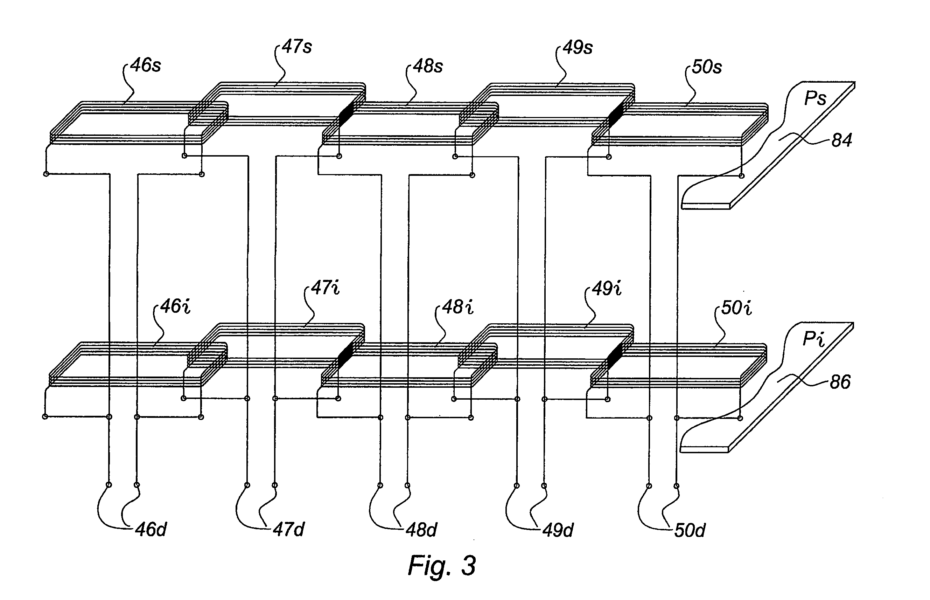

Selon une deuxième variante de l'invention, de type « biplan », représentée sur la figure 3, les antennes 46-50 comprennent chacune une boucle supérieure 46s-50s et une boucle inférieure 46i-50i connectées électriquement en parallèle. Les boucles inférieures 46i-50i sont au moins en partie superposées deux à deux, à la manière des boucles des moyens d'antenne 30 du premier mode de réalisation de l'invention décrit ci-dessus (figures 2a et 2b). De même, les boucles supérieures 46s-50s sont au moins en partie superposées deux à deux.

Les boucles supérieures 46s-50s d'une part et les boucles inférieures 46i-50i d'autre part s'étendent dans deux plans sensiblement parallèles Ps et Pi, respectivement, les boucles inférieure et supérieure d'une antenne se faisant face.

Les plans Ps et Pi sont de préférence matérialisés par des parois supérieure 84 et/ou inférieure 86, partiellement représentées, sensiblement parallèles et horizontales, servant de supports aux boucles 46s-50s et 46i-50i, respectivement, et utilisées comme couvercle et plateau de stockage d'une boîte de stockage de jetons, respectivement. De préférence, l'écartement entre couvercle 84 et plateau 86 est déterminé de manière que l'unité de communication 20 puisse échanger des informations avec n'importe quel jeton 12 posé ou empilé sur le plateau 86 et sous le couvercle 84, quelle que soit la hauteur de la pile. A titre d'exemple, un poste de lecture et/ou d'écriture de type « biplan » peut lire des piles de l'ordre de 30 jetons de jeu d'environ 3 mm d'épaisseur chacun.

A titre d'exemple d'application non limitatif, une boîte de stockage à poste de lecture selon l'invention est utilisée pour constituer l'aire de stockage fermée couramment appelé « chip float » (réserve de jetons de valeur) pour tables de jeux de type « Roulette Américaine », la boîte étant alors intégrée à la table.

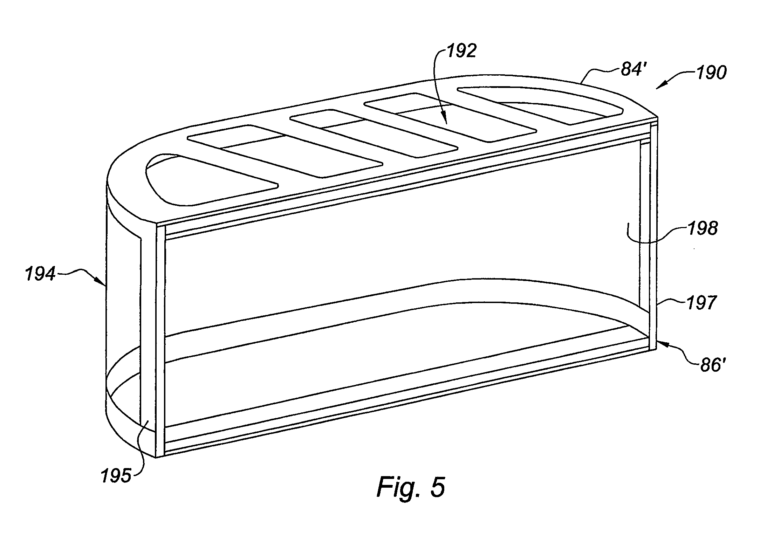

La figure 5 montre en perspective un exemple de boîte à jetons 190 portable, de type « biplan ». La boîte 190 comporte une paroi inférieure 86' qui intègre 5 boucles semblables aux boucles 46i-50i décrites ci-dessus, et une paroi supérieure 84' qui intègre 5 boucles semblables aux boucles 46s-50s décrites ci-dessus. La paroi supérieure 84' comporte 5 fenêtres en un matériau transparent et est maintenue parallèle à la paroi inférieure 86' par une paroi latérale transparente 194 en U évasé, comme représenté sur la figure 5, et par deux piliers d'extrémité 195 et 196 également utilisés pour le passage des câbles entre les boucles inférieures et supérieures. La boîte 190 est complétée par une paroi plane transparente mobile 198, montée coulissante verticalement sur les deux piliers 195 et 197.

D'une façon générale les applications des postes de lecture et/ou d'écriture selon l'invention sont multiples et couvrent notamment des applications à antennes « fixes » intégrées au moins en partie à une table de jeu, de change ou de caisse ou à une trieuse de jetons ou des applications intégrées dans des éléments de stockage de jetons portables et/ou amovibles tel que les casiers, boîtes portables, plateaux pour jetons. Bien évidemment, une même table de jeu peut être susceptible d'intégrer de façon fixe ou amovible plusieurs postes de lecture et/ou écriture selon l'invention, notamment pour les tables de « Roulette Américaine » pour remplir des fonctions diverses telles la gestion du parc des jetons sans valeur, la détection des mises sur zones d'enjeux, etc., selon les enseignements du Brevet FR-B-2.749.093 au nom du Demandeur.

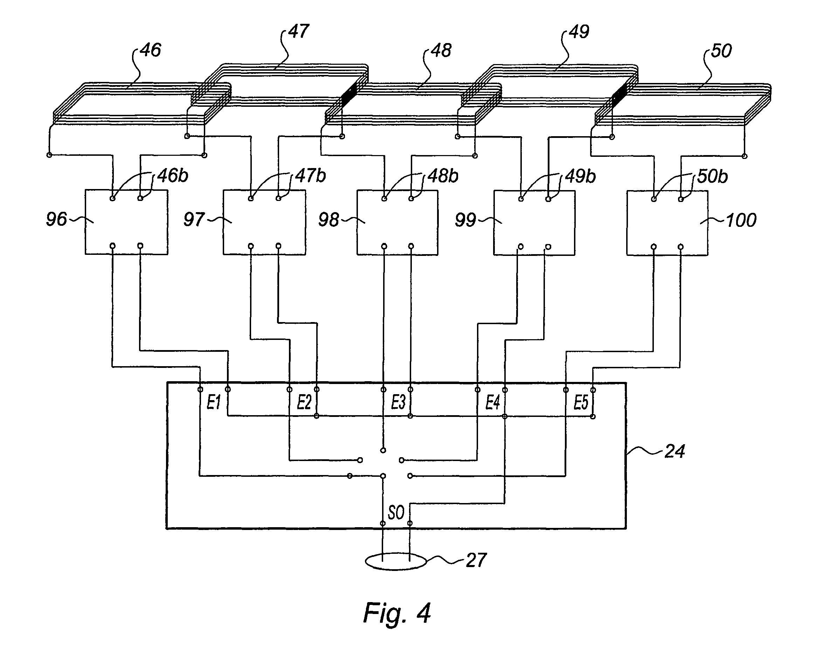

En résumé les postes de lecture selon l'invention sont utilisables de façon fixe ou amovible en association avec les dessus de tables de jeux, de change ou de caisse pour salles de jeu ou de casino, les trieuses de jetons et toute surface ou volume susceptible de recevoir des jetons de façon permanente ou temporaire, les jetons étant empilés ou en vrac. Le recouvrement de boucles d'antennes peut provoquer des effets perturbateurs de couplage électromagnétique entre les antennes d'autant plus important que la fréquence de travail est élevée. Pour annuler ou limiter ces effets, chaque antenne 46-50 est connectée électriquement aux moyens de sélection séquentielle 24 des antennes par l'intermédiaire d'un dispositif d'ajustement du déphasage entre la tension électrique aux bornes de l'antenne, 96-100 respectivement, et le courant électrique qui y circule, comme représenté sur la figure 4. De préférence, chaque dispositif d'ajustement de déphasage 96-100 est connecté à proximité immédiate de l'antenne 46-50 à laquelle il est destiné. De préférence, le dispositif d'ajustement de déphasage 96-100 est connecté directement aux bornes de cette antenne 46-50. Ces bornes ont été référencées 46b-50b et 46d-50d, respectivement, dans les variantes « monoplan » et « biplan », représentées sur les figures 4 et 3, respectivement.

Après câblage complet du poste de lecture et/ou d'écriture selon l'invention, chaque antenne 46-50 est réglée successivement par connexion électrique aux moyens de sélection séquentielle 24 puis ajustement dudit déphasage à une valeur optimale, facilement déterminée par l'homme du métier au moyen de simple essais. De préférence cette valeur est sensiblement égale à zéro.

Avantageusement, ce procédé de réglage du poste de lecture et/ou d'écriture selon l'invention permet de limiter la perturbation due à la présence à l'intérieur des boucles, de la masse métallique constituée par des portions des boucles adjacentes. Ce procédé permet encore de limiter le couplage électromagnétique entre les différentes boucles.

Bien entendu, la présente invention n'est pas limitée aux modes de réalisation décrits et représentés ci-dessus, fournis à titre illustratif et non limitatif.

La forme, le nombre, la disposition et la localisation des antennes de l'unité de communication 20 et de l'interface de sélection d'antennes 24 sont susceptibles d'adaptation en fonction des contraintes de fabrication et/ou des diverses spécifications données notamment par les exploitants des casinos.

En particulier, les antennes 46-50 peuvent être disposées dans l'épaisseur du plateau 10, au-dessus ou au-dessous du plateau 10, en particulier dans la variante « monoplan ». La disposition sous le plateau 10 permet avantageusement un montage facile. Avantageusement, cette disposition permet au plateau 10 de conserver une planéité parfaite.

Le positionnement des antennes dans le poste selon l'invention pourrait également être différent de ceux décrits. L'homme du métier saura déterminer le positionnement optimal des antennes en fonction des positions et des orientations des jetons.

## Revendications

1. Poste de lecture et/ou d'écriture dans une mémoire (21) d'un jeton (12) à circuit électronique, en particulier d'un jeton de jeu, ledit poste comportant
- des moyens de stockage dudit jeton (12), et
- une unité de communication (20) apte à échanger une information avec ladite mémoire (21) par l'intermédiaire de moyens d'antenne (30) quand ledit jeton (12) est positionné dans lesdits moyens de stockage (10) selon une orientation permettant ladite communication,
lesdits moyens d'antenne (30) comportant au moins des première (46) et deuxième (47) antennes comprenant des première (46') et deuxième (47') boucles, respectivement,
**caractérisé en ce que** lesdites première (46') et deuxième (47') boucles sont disposées, de façon adjacente, au moins en partie superposées l'une sur l'autre de manière à définir ensemble une zone de lecture et/ou d'écriture élargie et de qualité de transmission sensiblement homogène et **en ce que** ladite unité de communication (20) comporte des moyens de sélection séquentielle (24) desdites antennes (46-50).

2. Poste selon la revendication 1, **caractérisé en ce que** lesdites première (46) et deuxième (47) antennes comprennent chacune une boucle supérieure (46s,47s) et une boucle inférieure (46i,47i) connectées électriquement en parallèle, lesdites boucles inférieures (46i,47i) et/ou lesdites boucles supérieures (46s,47s) étant au moins en partie superposées l'une sur l'autre.

3. Poste selon la revendication 2, **caractérisé en ce que** lesdites boucles supérieures (46s,47s) d'une part et lesdites boucles inférieures (46i,47i) d'autre part s'étendent dans deux plans (Pi,Ps) sensiblement parallèles, lesdites boucles inférieure (46i,47i) et supérieure (46s,47s) d'une antenne (46,47) se faisant face.

4. Poste selon l'une quelconque des revendications précédentes, **caractérisé en ce que** la plus petite dimension d'une zone de recouvrement (76) des surfaces intérieures (56,57) définies par deux boucles (46',47') superposées est supérieure ou égale à la somme des largeurs des bandes périphériques (61,62) de mauvaise transmission desdites boucles (46',47').

5. Poste selon l'une quelconque des revendications précédentes, **caractérisé en ce que** au moins une desdites boucles (46',47',46s,47s, 46i,47i) comporte une pluralité de spires jointives superposées.

6. Poste selon la revendication 5, **caractérisé en ce que** lesdites spires sont superposées sur une hauteur comprise entre 4 et 10 mm.

7. Poste selon l'une quelconque des revendications précédentes, **caractérisé en ce que** lesdits moyens de stockage (10) comportent des parois supérieure (84) et/ou inférieure (86) sensiblement parallèles et servant de supports aux dites boucles (46s-50s ; 46i-50i), le nombre, l'emplacement, les dimensions et les zones de recouvrement desdites boucles (46s-50s ; 46i-50i) étant déterminés de manière que ladite unité de communication (20) puisse échanger ladite information avec ledit jeton (12) quelle que soit la position dudit jeton (12), pourvu que ledit jeton (12) s'étende sensiblement parallèlement aux dites parois supérieure (84) e/ou inférieure (86).

8. Poste selon la revendication 7, **caractérisé en ce que** lesdites parois supérieure (84) et inférieure (86) servent de supports aux dites boucles inférieures (46i-50i) et supérieures (46s-50s), respectivement.

9. Poste selon l'une quelconque des revendications précédentes, **caractérisé en ce que**, ladite unité de communication (20) comporte des moyens de discrimination des jetons.

10. Poste selon l'une quelconque des revendications précédentes, **caractérisé en ce que** ladite unité de communication (20) comporte des moyens d'élimination des doublons.

11. Poste selon l'une quelconque des revendications précédentes, **caractérisé en ce qu'**au moins une desdites antennes (46-50) est connectée électriquement à ladite unité de communication (20) par l'intermédiaire d'un dispositif (96-100) d'ajustement du déphasage entre la tension électrique aux bornes de ladite antenne (46-50) et l'intensité électrique circulant dans ladite antenne (46-50).

12. Poste selon la revendication 11, **caractérisé en ce que** ledit dispositif d'ajustement de déphasage (96-100) est connecté électriquement aux bornes (46b-50b ; 46d-50d) de ladite antenne (46-50) à proximité immédiate de ladite antenne (46-50).

13. Poste selon l'une des revendications précédentes, **caractérisé en ce qu'**il comporte une pluralité d'antennes intégrées en tout ou partie dans une table de jeu, de change ou de caisse ou dans une trieuse de jetons.

14. Poste selon l'une des revendications précédentes, **caractérisé en ce qu'**il comporte une pluralité d'antennes intégrées en tout ou partie dans un dispositif de stockage portatif et/ou amovible de jetons, notamment un casier, un plateau mobile ou une boîtes à jetons.

15. Moyens d'antenne (30) comportant des première (46) et deuxième (47) antennes comprenant respectivement des première (46') et deuxième (47') boucles au moins en partie superposées l'une sur l'autre, lesdits moyens d'antenne (30) étant adaptés pour être associés auxdits moyens de stockage (12) de jetons à circuit électronique et incorporés fonctionnellement dans un poste de lecture et/ou d'écriture selon l'une quelconque des revendications précédentes.

16. Procédé de réglage d'un poste de lecture et/ou d'écriture selon l'une quelconque des revendications 1 à 14, **caractérisé en ce qu'**il comporte les étapes successives suivantes :
a) câblage complet dudit poste de lecture et/ou d'écriture ;
b) connexion électrique de ladite première antenne (46) et ajustement du déphasage entre la tension électrique aux bornes de ladite première antenne (46) et le courant électrique circulant dans ladite première antenne (46) à une valeur prédéterminée ;
c) connexion électrique de ladite deuxième antenne (47) et ajustement du déphasage entre tension électrique aux bornes ladite deuxième antenne (47) par rapport au courant électrique circulant dans ladite deuxième antenne (47) à une valeur prédéterminée.

## Claims

1. Station for reading and/or writing in a memory (21) of a token (12), in particular of a gaming chip, incorporating an electronic circuit, said station including:
- means for storing said chip (12), and
- a communication unit (20) adapted to exchange information with said memory (21) when said chip (12) is positioned in said storage means (10) in an orientation allowing said communication via antenna means (30),
said antenna means (30) including first (46) and second (47) antennas comprising respective first (46') and second (47') loops
**characterized in that** said first (46') and second (47') loops are disposed adjacently and at least partly superposed on each other so as together to define an enlarged reading and/or writing area in which transmission quality is substantially homogeneous and **in that** said communication unit (20) includes means for sequential selection (24) of said antennas (46-50).

2. Station according to claim 1 **characterized in that** said first (46) and second (47) antennas each comprise an upper loop (46s, 47s) and a lower loop (46i, 47i) electrically connected in parallel, said lower loops (46i, 47i) and/or said upper loops (46s, 47s) being at least partly superposed on each other.

3. Station according to claim 2 **characterized in that** said upper loops (46s, 47s) and said lower loops (46i, 47i) lie in two substantially parallel planes (Pi, Ps), said lower (46i, 47i) and upper (46s, 47s) loops of an antenna (46, 47) facing each other.

4. Station according to any of the preceding claims **characterized in that** the smallest dimension of an area of overlap (76) on the inner surfaces (56, 57) defined by two superposed loops (46', 47') is greater than or equal to the sum of the widths of peripheral (61, 62) poor transmission strips of said loops (46', 47').

5. Station according to any of the preceding claims **characterized in that** at least one of said loops (46', 47', 46s, 47s, 46i, 47i) includes a plurality of contiguous superposed turns.

6. Station according to claim 5 **characterized in that** said turns are superposed to a height from 4 mm to 10 mm.

7. Station according to any of the preceding claims **characterized in that** said storage means (10) have substantially parallel upper (84) and/or lower (86) walls serving as supports for said loops (46s-50s; 46i-50i) and the number, location, dimensions and areas of overlap of said loops (46s-50s; 46i-50i) are determined so that said communication unit (20) can exchange said information with said chip (12) regardless of the position of said chip (12) provided that said chip (12) is substantially parallel to said upper (84) and/or lower (86) walls.

8. Station according to claim 7 **characterized in that** said upper (84) and lower (86) walls serve as supports for said lower (46i-50i) and upper (46s-50s) loops, respectively.

9. Station according to any of the preceding claims **characterized in that** said communication unit (20) includes chip discriminating means.

10. Station according to any of the preceding claims **characterized in that** said communication unit (20) includes duplicate elimination means.

11. Station according to any of the preceding claims **characterized in that** at least one of said antennas (46-50) is electrically connected to said communication unit (20) via a device (96-100) for adjusting the phase difference between the electrical voltage at the terminals of said antenna (46-50) and the electrical current flowing in said antenna (46-50).

12. Station according to claim 11 **characterized in that** said phase difference adjuster device (96-100) is electrically connected to terminals (46b-50b; 46d-50d) of said antenna (46-50) in the immediate vicinity of said antenna (46-50).

13. Station according to any of the preceding claims **characterized in that** it includes a plurality of antennas partially or wholly integrated into a gaming, change or cash table or into a chip sorting device.

14. Station according to any of the preceding claims **characterized in that** it includes a plurality of antennas partly or wholly integrated into a portable and/or removable chip storage device, in particular a chip rack, mobile tray or box.

15. Antenna means (30) including first (46) and second (47) antennas comprising respective first (46') and second (47') loops at least partly superposed on each other, said antenna means (30) being adapted to be associated with said storing means for chips (12) incorporating an electronic circuit and functionally incorporated into a read and/or write station according to any of the preceding claims.

16. Method of adjusting a read and/or write station according to any of claims 1 to 14, **characterized in that** it includes the following successive steps:
a) completely wiring said read and/or write station;
b) electrically connecting said first antenna (46) and adjusting said phase difference between said electrical voltage at the terminals of said first antenna (46) and said electrical current flowing in said first antenna (46) to a predetermined value;
c) electrically connecting said second antenna (47) and adjusting said phase difference between said electrical voltage at the terminals of said second antenna (47) and said electrical current flowing in said second antenna (47) to a predetermined value.

## Patentansprüche

1. Lese- und/oder Schreibstation in einem Speicher (21) einer Marke (12) mit elektronischer Schaltung, insbesondere einer Spielmarke, wobei die Station Folgendes umfasst:
- Mittel zur Lagerung der Marke (12), und
- eine Kommunikationseinheit (20), die in der Lage ist, über Antennenmittel (30) eine Information mit dem Speicher (21) auszutauschen, wenn die Marke (12) in den Lagerungsmitteln (10) in einer Ausrichtung angeordnet ist, die die Kommunikation ermöglicht,
wobei die Antennenmittel (30) mindestens erste (46) und zweite (47) Antennen umfassen, die erste (46') beziehungsweise zweite (47') Schleifen umfassen, **dadurch gekennzeichnet, dass** die ersten (46') und zweiten (47') Schleifen benachbart, einander mindestens teilweise überlagernd angeordnet sind, derart, dass sie gemeinsam eine erweiterte Lese- und/oder Schreibzone von im Wesentlichen homogener Übertragungsqualität bestimmen, und dass die Kommunikationseinheit (20) Mittel zum sequentiellen Auswählen (24) der Antennen (46 - 50) umfasst.

2. Station nach Anspruch 1, **dadurch gekennzeichnet, dass** die ersten (46) und zweiten (47) Antennen jeweils eine obere Schleife (46s, 47s) und eine untere Schleife (46i, 47i) umfassen, die elektrisch parallel verbunden sind, wobei die unteren Schleifen (46i, 47i) und/oder die oberen Schleifen (46s, 47s) einander zumindest teilweise überlagern.

3. Station nach Anspruch 2, **dadurch gekennzeichnet, dass** die oberen Schleifen (46s, 47s) einerseits und die unteren Schleifen (46i, 47i) andererseits sich in zwei Ebenen (Pi, Ps) erstrecken, die im Wesentlichen parallel sind, wobei die unteren (46i, 47i) und oberen (46s, 47s) Schleifen einer Antenne (46, 47) einander gegenüberliegen.

4. Station nach einem der vorhergehenden Ansprüche, **dadurch gekennzeichnet, dass** die kleinste Abmessung einer Überlappungszone (76) der inneren Flächen (56, 57), die durch die zwei sich überlagernden Schleifen (46', 47') bestimmt sind, größer oder gleich der Summe der Breiten der Außenbänder (61, 62) schlechter Übertragung der Schleifen (46', 47') ist.

5. Station nach einem der vorhergehenden Ansprüche, **dadurch gekennzeichnet, dass** mindestens eine der Schleifen (46', 47', 46s, 47s, 46i, 47i) mehrere sich überlagernde aneinander liegende Windungen umfasst.

6. Station nach Anspruch 5, **dadurch gekennzeichnet, dass** die Windungen sich auf einer Höhe von zwischen 4 und 10 mm überlagern.

7. Station nach einem der vorhergehenden Ansprüche, **dadurch gekennzeichnet, dass** die Lagerungsmittel (10) obere (84) und/oder untere (86) Wände umfassen, die im Wesentlichen parallel sind und den Schleifen (46s - 50s; 46i - 50i) als Träger dienen, wobei die Anzahl, der Standort, die Abmessungen und die Überlappungszonen der Schleifen (46s - 50s; 46i - 50i) derart bestimmt sind, dass die Kommunikationseinheit (20) die Information mit der Marke (12) unabhängig von der Position der Marke (12) austauschen kann, sofern die Marke (12) sich im Wesentlichen parallel zu den oberen (84) und/oder unteren (86) Wänden erstreckt.

8. Station nach Anspruch 7, **dadurch gekennzeichnet, dass** die oberen (84) und unteren (86) Wände den unteren (46i - 50i) beziehungsweise oberen (46s - 50s) Schleifen als Träger dienen.

9. Station nach einem der vorhergehenden Ansprüche, **dadurch gekennzeichnet, dass** die Kommunikationseinheit (20) Mittel zum Unterscheiden der Marken umfasst.

10. Station nach einem der vorhergehenden Ansprüche, **dadurch gekennzeichnet, dass** die Kommunikationseinheit (20) Mittel zum Beseitigen der Dubletten umfasst.

11. Station nach einem der vorhergehenden Ansprüche, **dadurch gekennzeichnet, dass** mindestens eine der Antennen (46 - 50) elektrisch über eine Vorrichtung (96 - 100) zum Anpassen der Phasenverschiebung zwischen der elektrischen Spannung an den Anschlüssen der Antenne (46 - 50) und der die Antenne (46 - 50) durchsetzenden elektrischen Feldstärke mit der Kommunikationseinheit (20) verbunden ist.

12. Station nach Anspruch 11, **dadurch gekennzeichnet, dass** die Vorrichtung zum Anpassen der Phasenverschiebung (96 - 100) mit den Anschlüssen (46b - 50b; 46d - 50d) der Antenne (46 - 50) in unmittelbarer Nähe der Antenne (46 - 50) elektrisch verbunden ist.

13. Station nach einem der vorhergehenden Ansprüche, **dadurch gekennzeichnet, dass** sie mehrere vollständig oder teilweise in einen Spiel-, Wechsel- oder Kassentisch oder in eine Markensortiermaschine integrierte Antennen umfasst.

14. Station nach einem der vorhergehenden Ansprüche, **dadurch gekennzeichnet, dass** sie mehrere vollständig oder teilweise in eine tragbare und/oder abnehmbare Lagerungsvorrichtung für Marken, insbesondere ein Fach, ein bewegliches Tablett oder einen Markenkasten, integrierte Antennen umfasst.

15. Antennenmittel (30), die erste (46) und zweite (47) Antennen umfassen, die erste (46') beziehungsweise (47') zweite Schleifen umfassen, die einander zumindest teilweise überlagern, wobei die Antennenmittel (30) eingerichtet sind, um mit den Lagerungsmitteln (12) der Marken mit elektronischer Schaltung verbunden und funktionell in eine Lese- und/oder Schreibstation nach einem der vorhergehenden Ansprüche eingegliedert zu werden.

16. Verfahren zum Regeln einer Lese- und/oder Schreibstation nach einem der Ansprüche 1 bis 14, **dadurch gekennzeichnet, dass** es die folgenden aufeinander folgenden Schritte umfasst:
a) vollständiges Verkabeln der Lese- und/oder Schreibstation;
b) elektrisches Verbinden der ersten Antenne (46) und Anpassen der Phasenverschiebung zwischen der elektrischen Spannung an den Anschlüssen der ersten Antenne (46) und dem elektrischen Strom, der in der ersten Antenne (46) fließt, an einen vorbestimmten Wert;
c) elektrisches Verbinden der zweiten Antenne (47) und Anpassen der Phasenverschiebung zwischen der elektrischen Spannung an den Anschlüssen der zweiten Antenne (47) in Bezug auf den elektrischen Strom, der in der zweiten Antenne (47) fließt, an einen vorbestimmten Wert.
